# NEUE EUROPÄISCHE PATENTSCHRIFT

(11) **EP 0 208 652 B2**
(45) Veröffentlichungstag und Bekanntmachung des Hinweises auf die Entscheidung über den Einspruch: **03.11.1993**
(45) Hinweis auf die Patenterteilung: 06.09.1989
(21) Anmeldenummer: 86810262.5
(22) Anmeldetag: 12.06.1986
(51) Int. Cl.: G12B 15/04, B23K 37/00

(54) **Sensor für Schweiss- und Schneidvorgänge**
Sensor for welding and cutting processes
Capteur pour les procédés de soudage et de coupe

(30) Priorität: 24.06.1985 CH 2673/85
(43) Veröffentlichungstag der Anmeldung: 14.01.1987
(73) Patentinhaber: C.A. Weidmüller GmbH & Co., D-32758 Detmold (DE)
(72) Erfinder: Schmall, Karl-Heinz, D-7570 Baden-Baden 19 (DE)
(74) Vertreter: Wenger, René

(56) Entgegenhaltungen:
- EP-A- 0 067 935
- EP-A- 0 110 523
- DD-A- 114 919
- DE-C- 1 565 165
- DE-U- 8 206 719
- "Trennen und fügen", Heft 14, ISSN 0172 6455, Feb. '85

## Beschreibung

Die Erfindung bezieht sich auf eine Vorrichtung gemäß dem Oberbegriff von Anspruch 1. Diese Vorrichtungen werden für die Automatisierung von Schweiß- und Schneidevorgängen in der Metallbearbeitung eingesetzt. Sie führen ein Werkzeug. wie z.B. einen Schneidbrenner oder eine Schweißelektrode, in einem bestimmten Abstand entlang einer vorbestimmbaren Bahn über ein Werkstück. Ein Überblick über den neuesten Stand der Sensor-Technik auf diesem Gebiet ist im Aufsatz von Schmall Karl-Heinz in « Automobil-Industrie » 4/82, Seiten 435 bis 442 enthalten.

Ein Problem bei diesen Vorrichtungen besteht darin, daß der Sensor sehr hohen Temperaturen ausgesetzt ist, da er möglichst nahe am Werkzeug angeordnet werden muß. Um eine Zerstörung des Sensors oder ggf. eine Verfälschung der Meßresultate durch die hohe Temperatur zu vermeiden, ist es daher erforderlich, eine Sensorkühlung vorzusehen. Bisher war es üblich, von außen z.B. über eine Ringdüse Preßluft auf den Sensor zu blasen. Die Kühlwirkung bei dieser Anordnung ist jedoch relativ gering. Außerdem entweicht die so ausgeblasene Preßluft in der Ebene des Werkstückes, was zu einer Störung des Arbeitsvorgangs führen kann, indem beispielsweise beim Schweißen Schutzgas weggeblasen wird.

Es ist daher eine Aufgabe der Erfindung, eine Vorrichtung der eingangs genannten Art zu schaffen, bei welcher der Sensor mit einem möglichst hohen Wirkungsgrad gekühlt werden kann, ohne daß durch den Kühlvorgang der Arbeitsprozeß beeinträchtigt wird. Eine weitere Aufgabe der Erfindung besteht darin, die Konstruktion zu vereinfachen, so daß die Vorrichtung auf einfachste Weise ausgetauscht oderjustiert werden kann. Diese Aufgabe wird erfindungsgemäß mit einer Vorrichtung gelöst, welche die Merkmale im Kennzeichen von Anspruch 1 aufweist.

Die Einleitung des Kühlmediums in die Schutzkappe bewirkt eine Kühlung unmittelbar am empfindlichsten Teil selbst, nämlich an der Sensoroberfläche. Durch die separate Zu- und Ableitung des Kühlmediums wird eine zwangsweise Strömung im Innern der Schutzkappe bewirkt. Je nach Aufbau und Art des Sensors können die Zu- und Ableitungen derart angeordnet werden, daß eine optimale Strömung erzielt wird. Wegen der besseren Ausnützung des Kühlmediums kann der Preßluftverbrauch erheblich gesenkt werden. Mit den vom Werkstück weggerichteten Austrittsöffnungen wird erreicht, daß die Strömung des austretenden Kühlmediums den Arbeitsvorgang am Werkstück nicht beeinträchtigt. So wird beim Schneidbrennen die Flamme oder der Lichtbogen nicht gestört und beim Schweißen erfolgt keine Verwirbelung des Schutzgases.

Eine besonders einfache Handhabung der Vorrichtung ergibt sich erfindungsgemäß dadurch, daß die Zufuhr des Kühlmediums wenigstens bis vor den Abschlußdeckel der Schutzkappe über eine Zuleitung erfolgt, welche koaxial mit elektrischen Leitungen zum bzw. vom Sensor angeordnet ist. Diese Anordnung hat den Vorteil, daß über einen einzigen Zuleitungsstrang Kühlmedium und elektrische Leitungen an den Sensor herangeführt werden. Beim Justieren oder Auswechseln des Sensors muß daher die Kühlmittelzufuhr nicht speziell berücksichtigt werden. Die Zufuhr kann außerdem von oben her, also von der kühlsten Zone her erfolgen, so daß kein aufwendiger Wärmeschutz für die Kühlmittelzuleitung erforderlich ist.

Eine besonders vorteilhafte Zu- und Ableitung des Kühlmediums wird dadurch erreicht, daß die Zu- bzw. Ableitungen als Bohrungen im Umfangsbereich des Abschlußdeckels ausgebildet sind. Auf diese Weise bleibt das Zentrum für die Befestigung der Sonde und deren Verbindung mit Anschlußleitungen frei. Das Kühlmedium kann etwa vertikal und rund um die Sonde eingeblasen bzw. wieder abgeführt werden.

Die Einleitung des zentral zugeführten Kühlmediums in die Schutzkappe erfolgt besonders vorteilhaft dadurch, daß über den Abschlußdeckel eine Verteilkammer zum Verteilen des Kühlmediums angeordnet ist und daß die Ableitungen vom Abschlußdeckel durch die Verteilkammer hindurch in die Atmosphäre führen. In derVerteilkammerkönnen auch elektrische Leiter angeschlossen werden, welche durch den Abschlußdeckel mit der Sonde verbunden sind. Der Zugang zur Sonde wird erleichtert, wenn die Schutzkappe mit dem Abschlußdeckel verschraubt ist. Ein allenfalls defekter Sensor kann dadurch auf einfachste Weise ausgetauscht werden, ohne daß die Kühlvorrichtung demontiert werden muß.

Ein Ausführungsbeispiel der Erfindung ist in den Zeichnungen dargestellt und wird nachstehend genauer beschrieben.

Es zeigen:

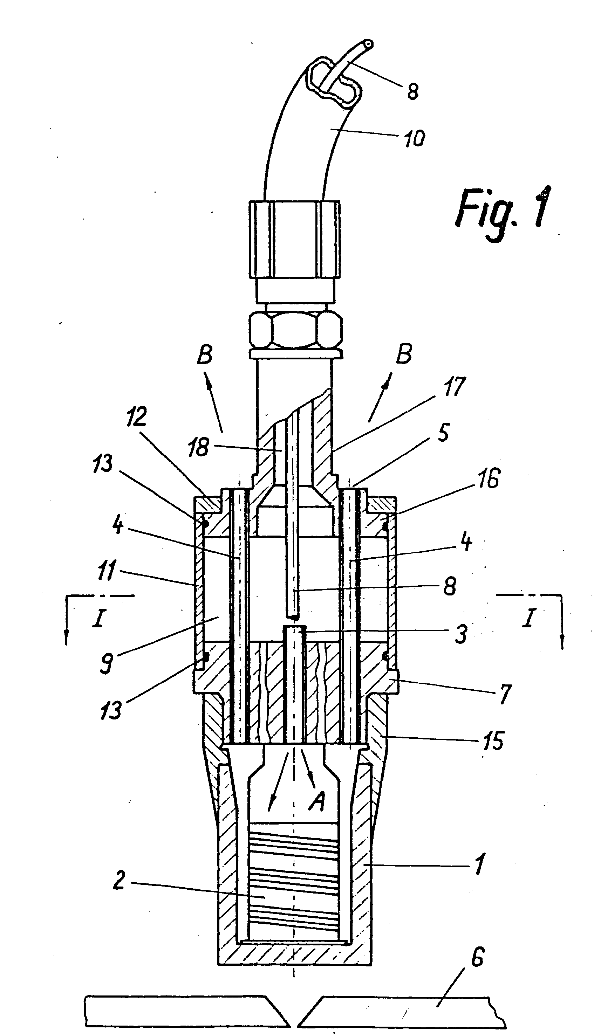

Fig. 1 einen Querschnitt in verschiedenen Ebenen durch eine erfindungsgemäße Vorrichtung, und
Fig. 2 einen Querschnitt durch die Ebene I-I gemäß Figur 1.

DerSensor2 beim dargestellten Ausführungsbeispiel ist beispielsweise ein induktiver Sensor mit Sender- und Empfängerspulen wie er beispielsweise in der EP-A-130 940 beschrieben ist. Die Arbeitsweise des Sensors an sich ist somit dem Fachmann bekannt und wird hier nicht näher beschrieben. Selbstverständlich könnte der Sensor auch eine Vorrichtung sein, welche auf andere Art und Weise Signale aussendet und/oder empfängt, wie insbesondere ein optischer oder ein Ultraschall-Sensor.

Der Sensor 2 ist von einer Schutzkappe 1 umgeben, welche zum Schutz gegen die hohen Umgebungstemperaturen vorzugsweise aus einem keramischen Material gefertigt ist. Der Sensor ist gegen die Oberfläche eines Werkstücks 6 gerichtet und läuft dem hier nicht dargestellten Werkzeug voraus. In bestimmten Anwendungsfällen wäre es allerdings auch denkbar, daß Sensor und Werkzeug koaxial aufgebaut sind, beispielsweise indem durch den Sensor axial ein Schneid- oder Schweissbrenner geführt ist. Bei einer derartigen Ausgestaltung müßte die Schutzkappe ersichtlicherweise als Ringkammer ausgebildet sein.

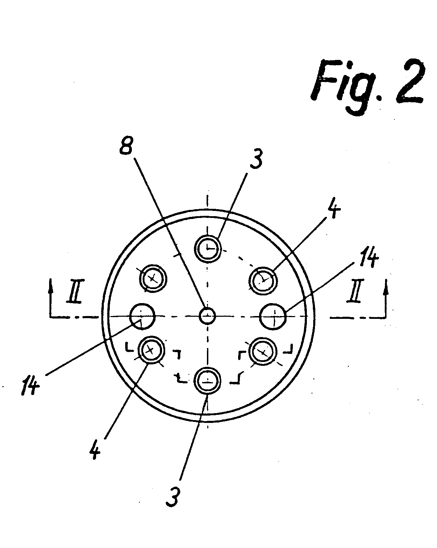

Die Schutzkappe 1 ist über eine Schutzkappenfassung 15 mit einem Abschlußdeckel 7 verschraubt. Auf der Unterseite dieses Abschlußdeckels ist auch der Sensor 2 befestigt. Durch diesen Abschlußdeckel 7 verlaufen Bohrungen oder Kanäle für die Zu- bzw. Abfuhr des gasförmigen Kühlmediums. Die Anordnung dieser Kanäle ist insbesondere in Figur 2 ersichtlich und wird nachstehend noch genauer erläutert.

Über dem Abschlußdeckel 7 ist eine Verteilkammer 9 angeordnet, welche durch einen entfernbaren Zylindermantel 11 gebildet wird. Der Zylindermantel 11 wird am Anschlußflansch 16 von einem aufschraubbaren Feststellring 12 gehalten und ist gegen außen mittels Dichtungen 13 abgedichtet. Der Anschlußflansch 16 weist einen Gewindehals 17 auf, an dem die ganze Vorrichtung an eine nicht dargestellte Halterung eingespannt werden kann. Der Gewindehals ist mit einer zentralen Bohrung 18 versehen, über welche das Kühlmedium sowie eine elektrische Leitung 8 an den Sensor herangeführt wird. Ein Schlauch 10 für das Kühlmedium ist am Gewindehals 17 befestigt, wobei innerhalb des Schlauches die elektrische Leitung 8 verläuft.

Zur besseren mechanischen Stabilität sind der Abschlußdeckel 7 und der Anschlußflansch 16 über Haltebolzen 14 miteinander verbunden, welche der besseren Übersichtlichkeit halber nur in Figur 2 dargestellt sind. Das zentral zugeführte Kühlmedium gelangt von der Verteilkammer 9 über zwei Zuleitungen 3 durch den Abschlußdeckel 7 hindurch ins Innere der Schutzkappe 1. Der Strom des Kühlmediums ist mit Pfeilrichtung A angedeutet. Die Ableitung des Kühlmediums aus der Schutzkappe 1 erfolgt über Ableitungen 4, welche als Röhrchen ausgebildet sind und vom Abschlußdeckel 7 her durch die Verteilkammer 9 und den Anschlußflansch 16 hindurchgeführt sind. Wie dargestellt sind die Austrittsöffnungen 5 dieser Ableitungen 4 nach oben, also vom Werkstück 6 weg gerichtet, so daß eine Strömung eintritt, die mit Pfeilrichtung B angedeutet ist. Diese Strömung bewirkt keine Beeinträchtigung des Arbeitsprozeßes in der Ebene des Werkstückes. Die Strömung dient vielmehr noch der zusätzlichen Kühlung der Halterung für die Vorrichtung sowie des Schlauches 10 mit der elektrischen Leitung 8.

Wie insbesondere in Figur 2 dargestellt, sind die Zuleitungen 3, die Ableitungen 4 und die Haltebolzen 14 im Umfangsbereich am Abschlußdeckel 7 angeordnet. Das Zentrum verbleibt so frei für die Durchführung der elektrischen Leitung 8. Außerdem wird eine günstige Strömung bewirkt. Es wäre jedoch auch denkbar, daß je nach Art und Aufbau des Sensors 2 eine einzige oder eine zusätzliche Zuleitung oder auch Ableitung im Zentrum des Abschlußdeckels 7 angeordnet ist.

## Patentansprüche

1. Vorrichtung zum Führen eines Werkzeuges auf einem Werkstück (6) bei Schweiss- und Schneidvorgängen mit einer dem Werkstück zugewandten Schutzkappe (1), in der ein Sensor (2) zum Ermitteln werkstückbezogener Parameter angeordnet ist, und mit einer Zuleitung (3) für die Zufuhr eines gasförmigen Kühlmediums in die Schutzkappe, dadurch gekennzeichnet, dass die Schutzkappe einen Abschlussdeckel (7) aufweist, in dem Bohrungen für die Zufuhr bzw. die Abfuhr des Kühlmediums angeordnet sind, dass die Zufuhr des Kühlmediums wenigstens bis vor den Abschlussdeckel der Schutzkappe über eine Zuleitung erfolgt, welche koaxial mit elektrischen Leitungen (8) zum bzw. vom Sensor angeordnet ist,
und dass die Ableitung des Kühlmediums aus der Schutzkappe über wenigstens eine Ableitung (4) erfolgt, deren Austrittsöffnung (5) gegen die dem Werkstück abgewandte Seite gerichtet ist.

2. Vorrichtung nach Anspruch 1, dadurch gekennzeichnet, dass die Bohrungen im Abschlussdeckel im Umfangsbereich angeordnet sind.

3. Vorrichtung nach Anspruch 1 oder 2, dadurch gekennzeichnet, dass über dem Abschlussdeckel (7) eine Verteilkammer (9) zum Verteilen des zentral zugeführten Kühlmediums angeordnet ist, und dass die Ableitungen (4) vom Abschlussdeckel (7) durch die Verteilkammer (9) hindurch nach aussen führen.

4. Vorrichtung nach einem der Ansprüche 1 bis 3, dadurch gekennzeichnet, dass die Schutzkappe (1) mit dem Abschlussdeckel (7) verschraubt ist.

## Claims

1. A device for guiding a tool on a workpiece (6) in welding and cutting processes with a protective cap (1) facing the workpiece, in which cap a sensor (2) is disposed for detecting parameters related to the workpiece, and with a supply line (3) for supplying a gaseous cooling medium into the protective cap, characterised in that the protective cap has a sealing lid (7) in which bores are arranged for the supply and discharge respectively of the cooling medium, that the supply of the cooling medium is effected at least to a location upstrean of the sealing lid of the protective cap (1) by way of a supply line which is disposed coaxially with electric leads (8) to and from the sensor respectively, and that discharge of the cooling medium from the protective cap is effected by way of at least one discharge line (4) whose outlet opening (5) is oriented towards the side facing away from the workpiece.

2. A device according to claim 1 characterised in that the bores in the sealing lid are arranged in the circumferential region.

3. A device according to claim 1 or claim 2 characterised in that a distributing chamber (9) for distributing the centrally supplied cooling medium is disposed above the sealing lid (7) and that the discharge lines (4) lead from the sealing lid (7) to the outside through the distributing chamber (9).

4. A device according to one of claims 1 to 3 characterised in that the protective cap (1) is screwed to the sealing lid (7).

## Revendications

1. Dispositif pour guider un outil sur une pièce à façonner (6) lors d'opérations de soudage et de découpage, comportant un capot de protection (1) qui est tourné vers la pièce à façonner et dans lequel se trouve disposé un capteur (2) servant à déterminer des paramètres liés à la pièce à façonner, et comportant un conduit d'amenée (3) servant à introduire un fluide de refroidissement gazeux dans le capot de protection, caractérisé en ce que le capot de protection possède un couvercle de fermeture (7) dans lequel sont disposés des perçages pour l'amenée et l'évacuation du fluide de refroidissement, en ce que l'amenée du fluide de refroidissement s'effectue au moins jusqu'en avant du couvercle de fermeture du capot de protection, par l'intermédiaire d'un conduit d'amenée qui est en position coaxiale avec des conducteurs électriques (8) aboutissant au capteur ou partant de ce dernier, et en ce que l'évacuation du fluide de refroidissement hors du capot de protection s'effectue par l'intermédiaire d'au moins un conduit d'évacuation (4) dont l'ouverture de sortie (5) est dirigée vers le côté situé à l'opposé de la pièce à façonner.

2. Dispositif selon la revendication 1, caractérisé en ce que les perçages prévus dans le couvercle de fermeture sont disposés dans la zone périphérique.

3. Dispositif selon la revendication 1 ou 2, caractérisé en ce qu'une chambre de répartition (9) servant à répartir le fluide de refroidissement, introduit centralement, est disposée au-dessus du couvercle de fermeture (7), et en ce que les conduits d'évacuation (4) se dirigent vers l'extérieur, à partir du couvercle de fermeture (7), en traversant la chambre de répartition (9).

4. Dispositif selon l'une des revendications 1 à 3, caractérisé en ce que le capot de protection (1) est vissé au couvercle de fermeture (7).
